# EUROPEAN PATENT SPECIFICATION

(11) **EP 4 570 352 B1**
(45) Date of publication and mention of the grant of the patent: **14.10.2026**
(21) Application number: 23216128.1
(22) Date of filing: 13.12.2023
(51) Int. Cl.: B01D 46/10, B01D 46/52

(54) **AMBIENT AIR FILTER DEVICE AND FILTER ELEMENT IN AMBIENT AIR FILTER DEVICE**
UMGEBUNGSLUFTFILTERVORRICHTUNG UND FILTERELEMENT IN DER UMGEBUNGSLUFTFILTERVORRICHTUNG
DISPOSITIF DE FILTRE À AIR AMBIANT ET ÉLÉMENT DE FILTRE DANS UN DISPOSITIF DE FILTRE À AIR AMBIANT

(43) Date of publication of application: 18.06.2025
(73) Proprietor: MANN+HUMMEL GmbH, 71636 Ludwigsburg (DE)
(72) Inventor: JUNGINGER, Bernd, 71636 Ludwigsburg (DE); THEBAULT, Eric, 71636 Ludwigsburg (DE); DOS SANTOS ASCENSAO, Macario Francisco, 71636 Ludwigsburg (DE)
(74) Representative: Mann + Hummel Intellectual Property

(56) References cited:
- GB-A- 750 099
- US-A- 2 681 155
- US-A- 3 234 717
- US-A- 5 531 892
- US-A1- 2005 284 116
- US-A1- 2008 120 953

## Description

### TECHNICAL FIELD

The invention relates to an ambient air filter device for arrangement in a front area of a vehicle as well as a filter element in an ambient air filter device.

### BACKGROUND ART

Air filters, which are integrated in the front area of vehicles, are usually arranged in a separate filter frame as part of the air duct in front of the radiator.

US 2010/0206172 A1 discloses a filter device for filtration of gaseous fluids having a multi-part housing with a first housing part and a second housing part connected to one another in a mounted state of the multi-part housing. A filter element is insertable into the multi-part housing. A connecting device penetrates the filter element and provides a connection between the first and second housing parts. The connecting device has at least one first housing projection monolithically formed on the first housing part. The connecting device further has a damping element arranged between the at least one first housing projection and the second housing part.

US 2019/0351361 A1 discloses a filter element for an air filter having a filter bellows with a filter medium folded multiple times. A recess is disposed in the filter bellows and is designed to receive a guiding rib of the air filter. The recess is curved at least in sections thereof along a length extension of the recess. The air filter has a housing and a guiding rib, wherein the filter element is arranged at least partially in the housing and the guiding rib is immersed at least partially in the recess of the filter element. US 3 234 717 A, GB 750 099 A, US 2005/284116 A1 and US 2008/120953 A1 are other relevant prior art documents.

### SUMMARY

It is an object of the invention to provide a compact and easily mountable ambient air filter device for arrangement in a front area of a vehicle.

Another object is to provide a use of a filter element in such an ambient air filter device.

The invention is described by the subject-matter of claims 1-10.

According to an aspect of the invention the object is achieved by an ambient air filter device for arrangement in a front area of a vehicle, the ambient air filter device including a spacer element for being mounted to a cooler of the vehicle, and a filter element arranged on the spacer element and including a comb-like structure, the filter element further including an air inlet side and an air outlet side for air flowing therethrough in a through-flow direction. The spacer element includes a plurality of studs on a top side, the plurality of studs for inserting into the filter element along an insertion direction. The filter element further includes a filter medium body including a pleated filter medium, the pleated filter medium including a plurality of pleats arranged parallel to the plurality of studs. The plurality of studs are inserted between adjacent ones of the plurality of pleats.

According to a further aspect of the invention the further object is achieved by a filter element in the ambient air filter device, the filter element including the air inlet side and the air outlet side for the air flowing therethrough in the through-flow direction, and the filter medium body including the pleated filter medium, the pleated filter medium including the plurality of pleats.

Advantageous embodiments are described in the dependent claims, the description and the drawings.

The proposed ambient air filter device as a frontend fine dust filter is mounted in front of a cooler to have a large installation space available. The ambient air filter device does not use hard plastic parts in front of the cooling fins to avoid a downgrade in insurance classification of the vehicle. Thus, a flat design is realized.

The filter element is mounted on a spacer element with studs that help assure that the filter element is positioned to adequately cover a surface of the cooler in a direction transverse to vehicle movement. Additionally a foam sealing attached to the filter on the top or bottom side, depending on the installation direction, guarantees a proper sealing when the filter element is in an intended mounting position. Also, when the filter element is being mounted to the spacer element, an air duct in front of a radiator of the vehicle applies pressure to the filter element via the foam sealing, so that pressure is also applied against mounting points of the spacer element and for being mounted to the cooler. As a result of this, the filter element has proper and stable positioning in the air duct and cannot move in any direction, e.g., the through-flow direction.

Advantageously, the insertion direction may be essentially perpendicular to a through-flow direction through the filter element.

According to a favorable embodiment of the ambient air filter device, the plurality of studs may include a plurality of fins. Thus, easy insertion of the studs between pleats of the filter medium body may be achieved.

According to a favorable embodiment of the ambient air filter device, the plurality of studs may be equally distributed along an extension of the spacer element. A reliable position of the filter medium body to the cooler may be advantageously achieved.

According to a favorable embodiment of the ambient air filter device, the spacer element may include the mounting points for being mounted to the cooler. The mounting points may be screw-on points for being screwed to the cooler or snap-fit points for being snapped to the cooler. By this way, the ambient air filter device may be fixed in a reliable manner to the vehicle in the direction transverse to vehicle movement. Additionally, as mentioned above, when the filter element is being mounted to the spacer element, the air duct applies pressure to the filter element via the foam sealing, so that pressure is also applied against the mounting points of the spacer element. As a result of this, the filter element has proper and stable positioning in the air duct and cannot move in any direction, e.g., the through-flow direction.

According to a favorable embodiment of the ambient air filter device, the ambient air filter device may further include a sealing arranged on one side of the filter medium body, the one side pointing in the insertion direction and being opposite to another side of the filter medium body facing the mounting points of the spacer element, and the sealing being for receiving the pressure from the air duct of the vehicle. Additionally a foam sealing attached to the filter on the on the top or bottom side, depending on the installation direction, guarantees a proper sealing when the filter element is in an intended mounting position. Also, as mentioned above, when the filter element is being mounted to the spacer element, the air duct applies pressure to the filter element via the foam sealing, so that pressure is also applied against the mounting points of the spacer element. As a result of this, the filter element has proper and stable positioning in the air duct and cannot move in any direction, e.g., the through-flow direction.

According to a favorable embodiment of the ambient air filter device, the ambient air filter device may further include a plurality of plastics pads arranged on the air outlet side of the filter element. To avoid direct contact of the filter element with the cooler and deformation of the cooler fins, several plastics pads, e.g., polyurethane (PUR) pads, may be attached to the filter element on the air outlet side.

According to a favorable embodiment of the ambient air filter device, the plurality of plastics pads may be equally distributed on an area of the air outlet side. Thus, the filter element may be advantageously supported by the cooler against the air flow pressure.

Advantageously, in a use arrangement both the air inlet side and the air outlet side may be fluidically connected to the environment. Advantageously, the air inlet side may be adapted to be flown through by unfiltered air and the air outlet side may be adapted to be flown through by filtered air.

According to a favorable embodiment of the ambient air filter device, the plurality of studs may be for fixing the filter element in relation to a lateral movement in or against the through-flow direction.

According to a favorable embodiment of the ambient air filter device, the plurality of studs may be for fixing the filter element in a direction transverse or perpendicular to the through-flow direction.

The ambient air filter device does not use hard plastic parts in front of the cooling fins to avoid a downgrade in insurance classification of the vehicle. Thus, a flat design is realized.

### BRIEF DESCRIPTION OF DRAWINGS

The present invention together with the above-mentioned and other objects and advantages may best be understood from the following detailed description of the embodiments, but not restricted to the embodiments, wherein is shown in:
- Figure 1: an ambient air filter device for arrangement in a front area of a vehicle according to an embodiment of the invention in an isometric view;
- Figure 2: an isometric explosion view of the ambient air filter device according to Fig. 1;
- Figure 3: the ambient air filter device in a rear view;
- Figure 4: the ambient air filter device in a side view;
- Figure 5: the ambient air filter device in a section view according to section plane A-A in Fig. 3; and
- Figure 6: a detailed view of detail B according to Fig. 5.

### DETAILED DESCRIPTION

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

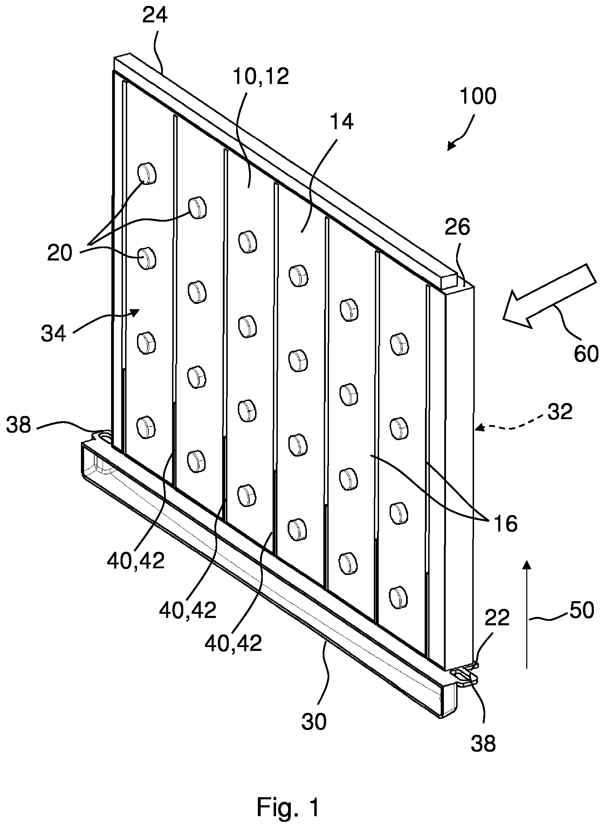

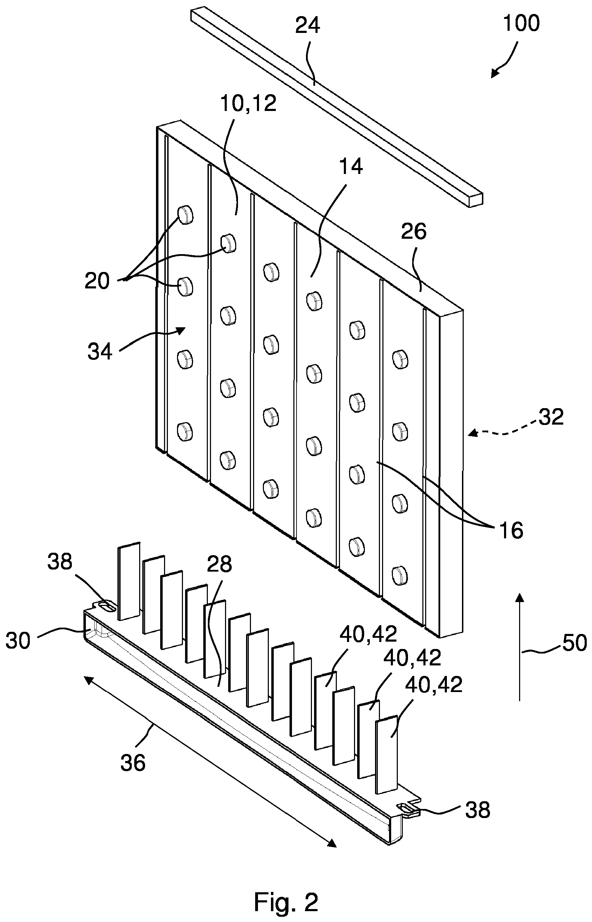

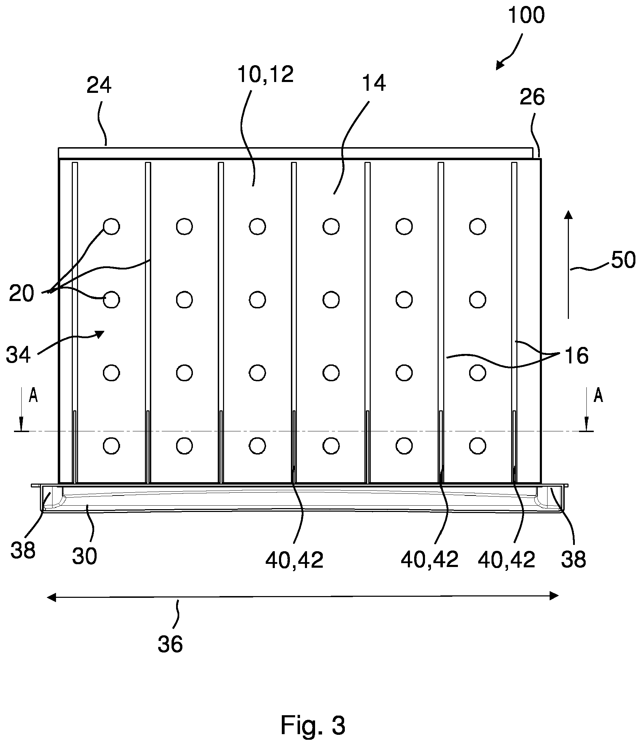

Figure 1 depicts an ambient air filter device 100 for arrangement in a front area of a vehicle according to an embodiment of the invention in an isometric view. In Figure 2 an isometric explosion view of the ambient air filter device 100 according to Fig. 1 is shown, whereas in Figure 3 the ambient air filter device 100 is depicted in a rear view.

The ambient air filter device 100 includes a spacer element 30 for being mounted to a cooler of the vehicle, and a filter element 10 arranged on the spacer element 30 and including a comb-like structure. The filter element 10 has an air inlet side 32 and an air outlet side 34 for air flowing through in a through-flow direction 60.

The ambient air filter device 100 is shown with a view to the air outlet side 34.

The spacer element 30 includes a plurality of studs 40 on a top side 28 for inserting into the filter element 10 along an insertion direction 50.

The filter element 10 has a filter medium body 12 including a pleated filter medium 14. Pleats 16 of the filter element 10 are arranged parallel to the studs 40, wherein the studs 40 are inserted between adjacent pleats 16 of the filter medium 14.

In the Figures the filter medium body 12 is not depicted with pleats 16 in details. Only at positions of the filter medium body 12, where the studs 40 are inserted into the filter medium body 12 pleats 16 are marked symbolically.

Also, for clarity, only some of the studs 40 in the Figures are marked with references.

The insertion direction 50 is essentially perpendicular to a through-flow direction 60 through the filter element 10.

As may be seen from Figure 2, the studs 40 may advantageously be formed as fins 42. The studs 40 are equally distributed along an extension 36 of the spacer element 30.

The spacer element 30 is provided with mounting points 38 for being mounted to the cooler. The mounting points 38 may be screw-on points for being screwed to the cooler or snap-fit points for being snapped to the cooler. By this way, the ambient air filter device 100 may be fixed in a reliable manner to the vehicle in a direction transverse or perpendicular to the through-flow direction 60, e.g., a direction parallel to the extension 36.

A sealing 24 is arranged at least on one side 26 of the filter medium body 12 pointing in the insertion direction 50. The sealing 24 guarantees a proper sealing when the filter element 10 is in an intended mounting position. Also, when the filter element 10 is being mounted to the spacer element 30, an air duct (not shown) in front of a radiator of the vehicle applies pressure to the filter element 10 via the sealing 24, so that pressure is also applied against the mounting points 38 of the spacer element 30. As a result of this, the filter element 10 has proper and stable positioning in the air duct and cannot move in any direction, e.g., the through-flow direction 60.

In the embodiment shown, a plurality of plastics pads 20 is provided on the air outlet side 34 of the filter element 10. The plastics pads 20 are equally distributed on an area of the air outlet side 34. The plastics pads 20 in the embodiment shown are arranged at regular distances from each other. Alternatively, irregular patterns of plastics pads 20 could also be used in order to keep the distance between the filter element 10 and the cooler where the ambient air filter device 100 is mounted to.

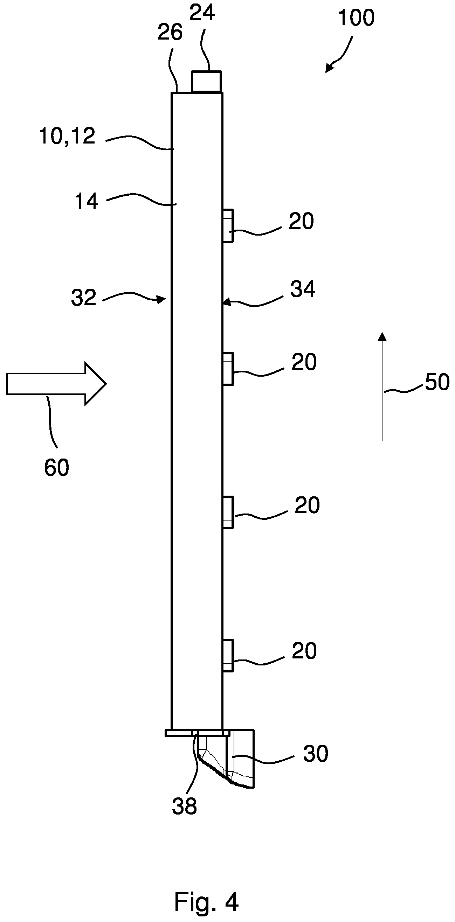

Figure 4 depicts the ambient air filter device 100 in a side view. In this view the plastics pads 20 are to be seen as protrusions from the surface of the air outlet side 34 of the filter element 10.

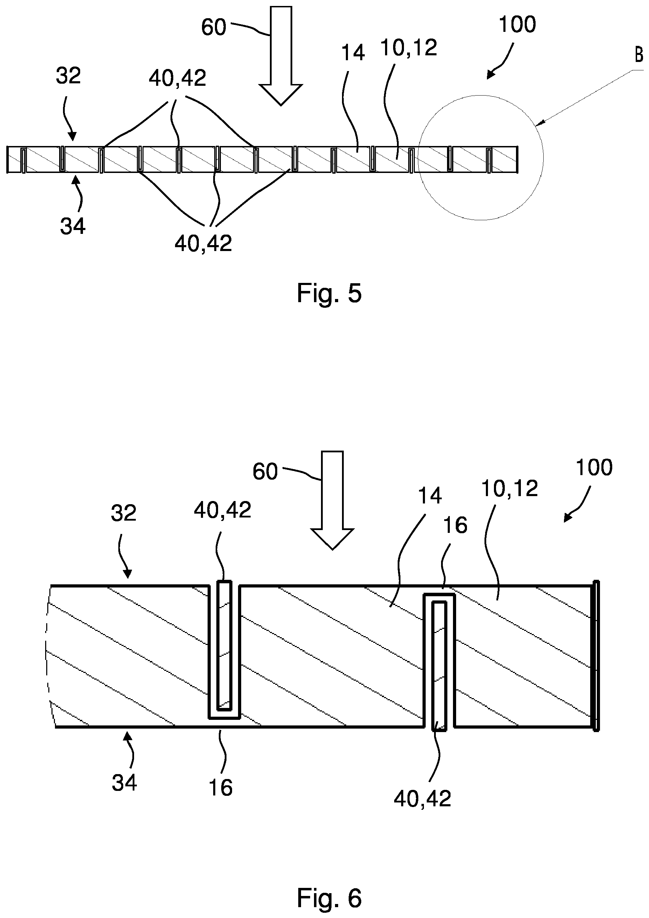

Figure 5 depicts the ambient air filter device 100 in a section view according to section plane A-A in Figure 3. The studs 40 are to be seen in the section view being inserted into the filter medium body 12 of the filter element 10.

Figure 6 depicts a detailed view of detail B according to Figure 5. Here it is clearly to be seen that the studs 40 are inserted in this embodiment in pleats 16 of the filter medium 14 alternatingly from the air inlet side 32 and from the air outlet side 34. In this embodiment, the filter element 10 is fixed in relation to a lateral movement in or against the through-flow direction 60 by the studs 40 immersed in the pleats 16 of the filter medium 14. In the direction transverse or perpendicular to the through-flow direction 60 (e.g., the direction parallel to the extension 36), the filter element 10 is also fixed by the studs 40.

In a use arrangement both the air inlet side 32 and the air outlet side 34 may both be fluidically connected to the environment. The air inlet side 32 may be adapted to be flown through by unfiltered air and the air outlet side 34 may be adapted to be flown through by filtered air.

For mounting the ambient air filter device 100 the filter element 10 first is mounted onto the spacer element 30. The studs 40 of the spacer element 30 are slipped into the pleats 16 of the filter medium 14 and thus are in a tight connection to the filter medium body 12.

Then the whole ambient air filter device 100 is mounted to the cooler in the vehicle and screwed on.

Mounting of the ambient air filter device 100 may be done preferably from a low side of the cooler in the vertical direction. Alternatively, a horizontal mounting direction may also be possible.

### REFERENCE SIGNS LIST

- 10: filter element
- 12: filter medium body
- 14: filter medium
- 16: pleat
- 20: plastic pad
- 24: sealing
- 26: side
- 28: top side
- 30: spacer element
- 32: air inlet side
- 34: air outlet side
- 36: extension
- 38: mounting point
- 40: stud
- 42: fin
- 50: insertion direction
- 60: through-flow direction
- 100: ambient air filter device

## Claims

1. An ambient air filter device (100) for arrangement in a front area of a vehicle, the ambient air filter device (100) comprising:
a spacer element (30) configured to mount to a cooler of the vehicle; and
a filter element (10) arranged on the spacer element (30) and comprising a comb-like structure, the filter element (10) further comprising an air inlet side (32) and an air outlet side (34) for air flowing therethrough in a through-flow direction (60); and
a plurality of plastics pads (20) arranged on the air outlet side (34) of the filter element (10),
wherein the spacer element (30) comprises a plurality of studs (40) on a top side (28), the plurality of studs (40) for inserting into the filter element (10) along an insertion direction (50),
wherein the filter element (10) further comprises a filter medium body (12) comprising a pleated filter medium (14), the pleated filter medium (14) comprising a plurality of pleats (16) arranged parallel to the plurality of studs (40), and
wherein the plurality of studs (40) are inserted between adjacent ones of the plurality of pleats (16),
wherein the filter element (10) is mountable in front of the cooler to cover a surface of the cooler in a direction transverse to movement of the vehicle.

2. The ambient air filter device (100) according to claim 1, wherein the plurality of studs (40) comprises a plurality of fins (42).

3. The ambient air filter device (100) according to any one of claim 1 or 2, wherein the plurality of studs (40) are equally distributed along an extension (36) of the spacer element (30).

4. The ambient air filter device (100) according to any one of claims 1 to 3, wherein the spacer element (30) comprises mounting points (38) for being mounted to the cooler.

5. The ambient air filter device (100) according to claim 4, further comprising a sealing (24) arranged on one side (26) of the filter medium body (12), the one side (26) pointing in the insertion direction (50) and being opposite to another side of the filter medium body (12) facing the mounting points (38) of the spacer element (30), and the sealing (24) being for receiving a pressure from an air duct of the vehicle.

6. The ambient air filter device (100) according to claim 5, wherein the plurality of plastics pads (20) are equally distributed on an area of the air outlet side (34).

7. The ambient air filter device (100) according to any one of claims 1 to 6, wherein the plurality of studs (40) is for fixing the filter element (10) in relation to a lateral movement in or against the through-flow direction (60).

8. The ambient air filter device (100) according to any one of claims 1 to 7, wherein the plurality of studs (40) is for fixing the filter element (10) in a direction transverse or perpendicular to the through-flow direction (60).

9. A filter element (10) configured for use in the ambient air filter device (100) according to any one of claims 1 to 8, the filter element (10) comprising:
the air inlet side (32) and the air outlet side (34) for the air flowing therethrough in the through-flow direction (60); and
the filter medium body (12) comprising the pleated filter medium (14), the pleated filter medium (14) comprising the plurality of pleats (16).

10. A vehicle cooling assembly, the cooling assembly comprising:
the ambient air filter device (100) according to any one of claims 1 to 8; and
the cooler of the vehicle,
wherein the filter element (10) is mounted in front of the cooler and covers the surface of the cooler in the direction transverse to movement of the vehicle.

## Patentansprüche

1. Umgebungsluftfiltervorrichtung (100) zur Anordnung im Frontbereich eines Fahrzeugs, wobei die Umgebungsluftfiltervorrichtung (100) umfasst:
einen Abstandshalter (30), der zur Befestigung an einem Kühler des Fahrzeugs ausgelegt ist; und
ein Filterelement (10), das auf dem Abstandshalter (30) angeordnet ist und eine kammartige Struktur aufweist, wobei das Filterelement (10) ferner eine Lufteinlassseite (32) und eine Luftauslassseite (34) für einen Luftstrom durch das Filterelement in einer Durchströmungsrichtung (60) umfasst; und
eine Vielzahl von Kunststoffpads (20), die auf der Luftauslassseite (34) des Filterelements (10) angeordnet sind,
wobei der Abstandshalter (30) eine Vielzahl von Noppen (40) an einer Oberseite (28) aufweist, wobei die Vielzahl von Noppen (40) dazu dient, entlang einer Einführrichtung (50) in das Filterelement (10) eingeführt zu werden,
wobei das Filterelement (10) ferner einen Filtermedienkörper (12) umfasst, der ein gefaltetes Filtermedium (14) umfasst, wobei das gefaltete Filtermedium (14) eine Vielzahl von Falten (16) umfasst, die parallel zu der Vielzahl von Noppen (40) angeordnet ist, und
wobei die Vielzahl von Noppen (40) zwischen benachbarte Falten der Vielzahl von Falten (16) eingeführt ist,
wobei das Filterelement (10) vor dem Kühler montierbar ist, um eine Oberfläche des Kühlers in einer Richtung quer zur Fahrtrichtung des Fahrzeugs abzudecken.

2. Umgebungsluftfiltervorrichtung (100) nach Anspruch 1, wobei die Vielzahl von Noppen (40) eine Vielzahl von Lamellen (42) umfasst.

3. Umgebungsluftfiltervorrichtung (100) nach einem der Ansprüche 1 oder 2, wobei die Vielzahl von Noppen (40) gleichmäßig entlang einer Verlängerung (36) des Abstandshalters (30) verteilt ist.

4. Umgebungsluftfiltervorrichtung (100) nach einem der Ansprüche 1 bis 3, wobei der Abstandshalter (30) Befestigungspunkte (38) zur Befestigung am Kühler umfasst.

5. Umgebungsluftfiltervorrichtung (100) nach Anspruch 4, die ferner eine Abdichtung (24) umfasst, die an einer Seite (26) des Filtermedienkörpers (12) angeordnet ist, wobei die eine Seite (26) in Einführrichtung (50) weist und einer anderen Seite des Filtermedienkörpers (12) gegenüberliegt, die den Befestigungspunkten (38) des Abstandshalters (30) zugewandt ist, und wobei die Abdichtung (24) dazu dient, einen Druck aus einem Luftkanal des Fahrzeugs aufzunehmen.

6. Umgebungsluftfiltervorrichtung (100) nach Anspruch 5, wobei die Vielzahl von Kunststoffpads (20) gleichmäßig über einen Bereich der Luftauslassseite (34) verteilt ist.

7. Umgebungsluftfiltervorrichtung (100) nach einem der Ansprüche 1 bis 6, wobei die Vielzahl von Noppen (40) dazu dient, das Filterelement (10) gegen eine seitliche Bewegung in oder entgegen der Durchströmungsrichtung (60) zu sichern.

8. Umgebungsluftfiltervorrichtung (100) nach einem der Ansprüche 1 bis 7, wobei die Vielzahl von Noppen (40) dazu dient, das Filterelement (10) in einer Richtung quer oder senkrecht zur Durchströmungsrichtung (60) zu fixieren.

9. Filterelement (10), das zur Verwendung in der Umgebungsluftfiltervorrichtung (100) nach einem der Ansprüche 1 bis 8 ausgelegt ist, wobei das Filterelement (10) umfasst:
die Lufteinlassseite (32) und die Luftauslassseite (34) für die in Durchströmungsrichtung (60) durch sie hindurchströmende Luft; und
den Filtermediumkörper (12), der das gefaltete Filtermedium (14) umfasst, wobei das gefaltete Filtermedium (14) die Vielzahl von Falten (16) umfasst.

10. Fahrzeugkühlvorrichtung, wobei die Kühlvorrichtung umfasst:
die Umgebungsluftfiltervorrichtung (100) nach einem der Ansprüche 1 bis 8; und den Kühler des Fahrzeugs,
wobei das Filterelement (10) vor dem Kühler montiert ist und die Oberfläche des Kühlers in der Richtung quer zur Fahrtrichtung des Fahrzeugs abdeckt.

## Revendications

1. Dispositif de filtration d'air ambiant (100) destiné à être installé dans la partie avant d'un véhicule, le dispositif de filtration d'air ambiant (100) comprenant:
une entretoise (30) conçue pour être montée sur un radiateur du véhicule; et un élément filtrant (10) disposé sur l'entretoise (30) et comprenant une structure en forme de peigne, l'élément filtrant (10) comprenant en outre un côté entrée d'air (32) et un côté sortie d'air (34) pour l'air s'écoulant à travers celui-ci dans une direction d'écoulement (60); et
une pluralité de coussinets en plastique (20) disposées sur le côté sortie d'air (34) de l'élément filtrant (10),
dans lequel l'entretoise (30) comprend une pluralité de goujons (40) sur une face supérieure (28), la pluralité de goujons (40) étant destinée à être insérée dans l'élément filtrant (10) selon une direction d'insertion (50),
dans lequel l'élément filtrant (10) comprend en outre un corps de milieu filtrant (12) comprenant un milieu filtrant plissé (14), le milieu filtrant plissé (14) comprenant une pluralité de plis (16) disposés parallèlement à la pluralité de goujons (40), et
dans lequel la pluralité de goujons (40) est insérée entre des plis adjacents de la pluralité de plis (16),
dans lequel l'élément filtrant (10) peut être monté devant le radiateur afin de recouvrir une surface du radiateur dans une direction transversale au déplacement du véhicule.

2. Dispositif de filtration d'air ambiant (100) selon la revendication 1, dans lequel la pluralité de goujons (40) comprend une pluralité de lamelles (42).

3. Dispositif de filtration d'air ambiant (100) selon l'une quelconque des revendications 1 ou 2, dans lequel la pluralité de goujons (40) est répartie de manière uniforme le long d'une extension (36) de l'entretoise (30).

4. Dispositif de filtration d'air ambiant (100) selon l'une quelconque des revendications 1 à 3, dans lequel l'entretoise (30) comprend des points de montage (38) destinés à être montés au radiateur.

5. Dispositif de filtration d'air ambiant (100) selon la revendication 4, comprenant en outre un scellement (24) disposé sur un côté (26) du corps de milieu filtrant (12), ce côté (26) étant orienté dans la direction d'insertion (50) et étant opposé à un autre côté du corps de milieu filtrant (12) faisant face aux points de montage (38) de l'entretoise (30), et le scellement (24) étant destiné à recevoir une pression provenant d'un conduit d'air du véhicule.

6. Dispositif de filtration d'air ambiant (100) selon la revendication 5, dans lequel la pluralité de coussinets en matière plastique (20) est répartie de manière uniforme sur une zone du côté sortie d'air (34).

7. Dispositif de filtration d'air ambiant (100) selon l'une quelconque des revendications 1 à 6, dans lequel la pluralité de goujons (40) est destinée à fixer l'élément filtrant (10) par rapport à un mouvement latéral dans la direction d'écoulement (60) ou à l'encontre de celle-ci.

8. Dispositif de filtration d'air ambiant (100) selon l'une quelconque des revendications 1 à 7, dans lequel la pluralité de goujons (40) sert à fixer l'élément filtrant (10) dans une direction transversale ou perpendiculaire à la direction d'écoulement (60).

9. Élément filtrant (10) configuré pour être utilisé dans le dispositif de filtration d'air ambiant (100) selon l'une quelconque des revendications 1 à 8, l'élément filtrant (10) comprenant:
le côté entrée d'air (32) et le côté sortie d'air (34) pour l'air s'écoulant à travers ceuxci dans la direction d'écoulement (60); et
le corps de milieu filtrant (12) comprenant le milieu filtrant plissé (14), le milieu filtrant plissé (14) comprenant la pluralité de plis (16).

10. Ensemble de refroidissement pour véhicule, l'ensemble de refroidissement comprenant:
le dispositif de filtration d'air ambiant (100) selon l'une quelconque des revendications 1 à 8;et
le radiateur du véhicule,
dans lequel l'élément filtrant (10) est monté devant le radiateur et recouvre la surface du radiateur dans la direction transversale au déplacement du véhicule.
